# EUROPEAN PATENT APPLICATION

(11) **EP 1 694 029 A1**
(43) Date of publication of application: **23.08.2006**
(21) Application number: 06250537.5
(22) Date of filing: 01.02.2006
(51) Int. Cl.: H04L 29/06, H04L 12/56

(54) **Method and apparatus for handling network jitter in a voice-over IP communication network using a virtual jittter buffer and time scale modification**

(30) Priority: 22.02.2005 US 62966
(71) Applicant: LUCENT TECHNOLOGIES INC., Murray Hill, New Jersey 07974-0636 (US)
(72) Inventor: Minkyu, Lee, New Jersey 08551 (US); McGowan, James William, New Jersey 08889 (US); Recchione, Michael Charles, New Jersey 07110 (US)
(74) Representative: Cockayne, Gillian

(57) **Abstract**

A method and apparatus for handling network jitter in a Voice-over IP communications network using a virtual jitter buffer and time scale modification. A sequence of voice packets is received, where the sequence of voice packets may comprise a talk spurt, and the packets are stored in a jitter buffer having an initial playback latency of zero. Then, a number of the initial voice packets in the sequence are advantageously time-expanded and played out, thereby increasing the depth of the jitter buffer (and thus the amount of network jitter handled). Then, a number of subsequent voice packets are advantageously time-compressed and played out to return the jitter buffer depth to zero. In one embodiment, the sequence of voice packets comprises a talk spurt, and in another embodiment, the sequence of voice packets comprise those which are received during a cellular handoff.

## Description

### Field of the Invention

The present invention relates generally to the field of packet based communications networks for providing VoIP (Voice over Internet Protocol) communications services, and in particular to a method and apparatus for handling network jitter without introducing additional playback latency.

### Background of the Invention

When voice packets are transmitted through a communications network for providing VoIP (Voice over Internet Protocol), the regularity of intervals between the receipt of consecutive packets is inevitably disrupted. This phenomenon is known as "network jitter." Such jitter can cause packet losses whenever a packet arrives too late and thereby misses its playback time, and these packet losses eventually degrade voice quality. In typical state-of-the-art VoIP systems, a packet buffer on the receiving end is used to alleviate this problem by adding a fixed amount of initial playback delay to compensate for the jitter. This "jitter buffer" then supplies a steady stream of voice packets into a playout mechanism, starting after the fixed delay. Thus, any amount of jitter up to the amount of the fixed delay will be accommodated with no loss of voice quality. Only packets whose delay in transmission exceeds this fixed delay will be "lost." (For such "lost" packets, most systems employ conventional packet loss concealment techniques in an attempt to limit the resulting degradation of voice quality. Nonetheless, excessive packet loss will invariably result in significant voice quality degradation.)

Therefore, if the initial latency of the jitter buffer were arbitrarily large, any arbitrarily large amount of network jitter could be theoretically absorbed. However, in real world voice communication systems, long delays are not practical due to real-time constraints. Due to these real world constraints, typical jitter buffer initial playback latency in most voice packet communications systems is 20 to 60 milliseconds, which thereby results in an additional end-to-end delay of 20 to 60 milliseconds. In most jitter buffer designs, this initial playback latency is identical to the jitter protection afforded by the buffer. Thus, to accommodate increased jitter, playback latency must be correspondingly increased. In VoIP, especially in wireless VoIP, this additional delay can play a critical role in terms of network capacity, voice quality, *etc.*

In a land-to-mobile connection, there tends to be only minor packet loss even if the jitter buffer inserts only a 20 millisecond delay. For mobile-to-land and mobile-to-mobile connections, however, the jitter is substantially more pronounced, and 60 milliseconds of delay or more is often needed to bring packet loss to an acceptable level. Although details of the network affect the exact amount of jitter observed, the general trend holds that jitter of at least several packet lengths needs to be accommodated to deliver reasonable voice quality. (Voice packets typically comprise 20 milliseconds of speech.) In addition, increasing the number of users on a given mobile base station significantly increases the jitter, so the ability to accommodate increasing amounts of jitter in the receiver will advantageously result in a larger number of users supported with reasonable voice quality on each base station.

When a talker speaks over a telephone in a voice telecommunications system, the message is delivered to the other side through the underlying network. ITU-T G.114, a well-known standard promulgated by the International Telecommunications Union and fully familiar to those of ordinary skill in the art, specifies the maximum end-to-end delay permitted for regular telephony conversations between two human users in networks which are to be compliant with the standard. In particular, the total end-to-end delay is recommended to be less than 150 milliseconds. However, in wireless VoIP systems such as, for example, CDMA 2000 EVDO rev. A, a wireless communications standard fully familiar to those of ordinary skill in the art, this delay requirement is often very difficult to achieve consistently, since high packet jitter converts directly into high fixed delays (resulting from high playback latency) when using a traditional jitter buffer.

One approach that has been employed is to use an "adaptive" jitter buffer, wherein the amount of fixed delay may be adjusted such as, for example, on a talk spurt by talk spurt basis. (A "talk spurt" is a segment of a talker's speech preceded and followed by silence.) Such an approach examines the behavior of the network (e.g., the amount of packet loss given the previous amount of fixed delay added by the jitter buffer) and then adjusts the jitter buffer's delay for the next talk spurt accordingly. However, this approach still introduces an amount of playback latency equal to the amount of jitter protection, even though it does so adaptively based on the network conditions. Therefore, it would be highly desirable to provide a method and apparatus for handling high network jitter without introducing high playback latency.

### Summary of the Invention

In accordance with the principles of the present invention, a method and apparatus is provided for handling network jitter in a communications network using a virtual jitter buffer and time scale modification. In accordance with one illustrative embodiment of the present invention, a sequence of voice packets is received, where the sequence of voice packets preferably comprises a talk spurt, and the packets are stored in a jitter buffer having an initial playback latency of zero, thereby effectively skipping the jitter buffer and immediately playing out the packet to the listener with no delay. A predetermined number of the initial voice packets (e.g., the first several voice packets of the sequence) are advantageously time-expanded as they are played out, thereby increasing the effective latency of the jitter buffer (and thus the amount of network jitter handled) until a predetermined maximum effective latency is reached. Then, subsequent voice packets are played out at their normal length (i.e., at normal speed), until the receipt of a packet indicative of the end of the talk spurt is detected, at which point the remaining (un-played out) voice packets are advantageously time-compressed as they are played out to return the effective jitter buffer latency to zero.

In this manner, an essentially zero delay jitter buffer is advantageously achieved, while many voice packets are nonetheless protected from network jitter by a predetermined amount. That is, in accordance with this illustrative embodiment of the invention, a virtual jitter buffer provides network jitter protection in the "middle" of a talk spurt, thereby protecting the vast majority of voice packets from network jitter, and yet the virtual jitter buffer length becomes zero at each talk spurt beginning and end, thereby resulting in no perceived added delay.

In accordance with another illustrative embodiment of the present invention, a virtual jitter buffer advantageously provides added network jitter protection in a mobile (*e*.*g*., wireless) communications network, as a cellular "handoff" occurs, when network jitter is likely to be most problematic, and yet the virtual jitter buffer length is not increased during other times, when network jitter is likely to be less of a problem. In particular, the period of time when a mobile station is switching its service base station from one base station to another typically creates a service gap. In accordance with this illustrative embodiment of the present invention, this service gap is covered by advantageous use of time-expansion in anticipation of the handoff and time-compression after the handoff has been completed.

### Brief Description of the Drawings

Figure 1 shows a sample timing diagram of conversational turns between two speakers and the resulting conversational delays therebetween.
Figure 2 shows the operation of a time scale modification technique for performing active talk spurt management of a single talk spurt with use of a virtual jitter buffer in accordance with one illustrative embodiment of the present invention.
Figure 3 shows the operation of a time scale modification technique for performing active talk spurt management of a conversational turn with use of a virtual jitter buffer in accordance with one illustrative embodiment of the present invention.
Figure 4 shows a flow diagram of a method for performing talk spurt detection in accordance with an illustrative embodiment of the present invention.
Figure 5 shows a flow diagram of a method for handling network jitter in a Voice-over IP communications network using a virtual jitter buffer and time scale modification in accordance with the illustrative embodiment of the present invention as shown in Figure 2.
Figure 6 shows the operation of a time scale modification technique for covering a service gap during a cellular handoff with use of a virtual jitter buffer in accordance with another illustrative embodiment of the present invention.
Figure 7 shows a flow diagram of a method for handling network jitter in a Voice-over IP communications network using a virtual jitter buffer and time scale modification in accordance with the illustrative embodiment of the present invention as shown in Figure 6.

### Detailed Description of the Illustrative Embodiments

### A first illustrative embodiment of the present invention

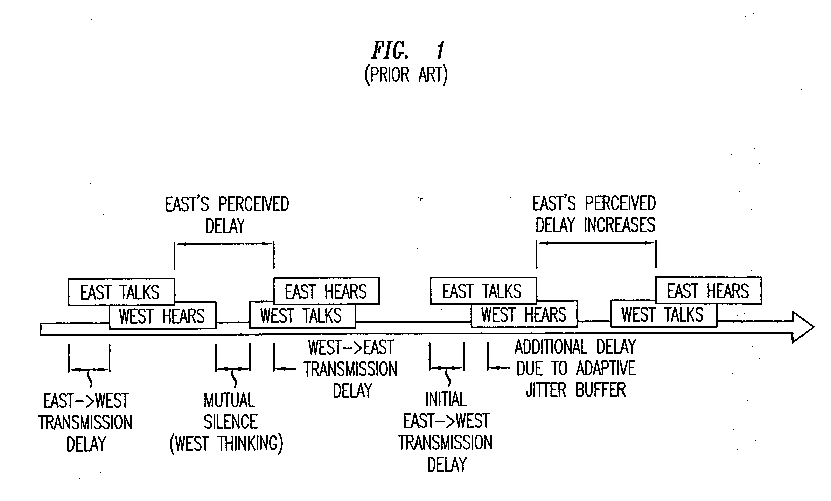

In accordance with one illustrative embodiment of the present invention, a method of actively managing talk spurts in each conversational turn between talkers is employed. The illustrative talk spurt management method advantageously enables zero initial buffering delay while providing jitter protection to the packets within each talk spurt, thereby resulting in a reduced packet loss rate and correspondingly higher voice quality. Figure 1 shows a sample timing diagram of conversational turns between two speakers and the resulting conversational delays therebetween when prior art jitter buffer techniques are employed. The speakers are identified as "East" and "West" respectively. In particular, the figure shows a first conversational turn by East followed by a first conversational turn by West, followed by a second conversational turn by East and then by a second conversational turn by West. (A "conversational turn" is a period of time during which only a single party to the conversation is speaking.)

In accordance with prior art techniques, it is assumed in Figure 1 that as a result of network behavior (e.g., packet loss) which occurs during the first conversational turn by East, an adaptive jitter buffer associated with West's receiver determines that it is necessary to add jitter buffer delay for use in the second conversational turn by East. Thus, as can be seen in the figure, this added jitter buffer delay results in an increase in East's perceived delay.

Each conversational turn consists of one or more talk spurts. The one-way transmission delay (e.g., east to west or west to east in Figure 1) includes packetization and encoding delays at the sender, network transmission delay, jitter buffer delay, and decoding delay at the receiver. In accordance with the principles of the present invention, the jitter buffer delay is advantageously reduced or eliminated. By reducing the jitter buffer delay, each talker's total perceived delay can be advantageously reduced as well. Specifically, active management of the talk spurts within each conversational turn enables us to significantly reduce the jitter buffer delay in accordance with an illustrative embodiment of the present invention.

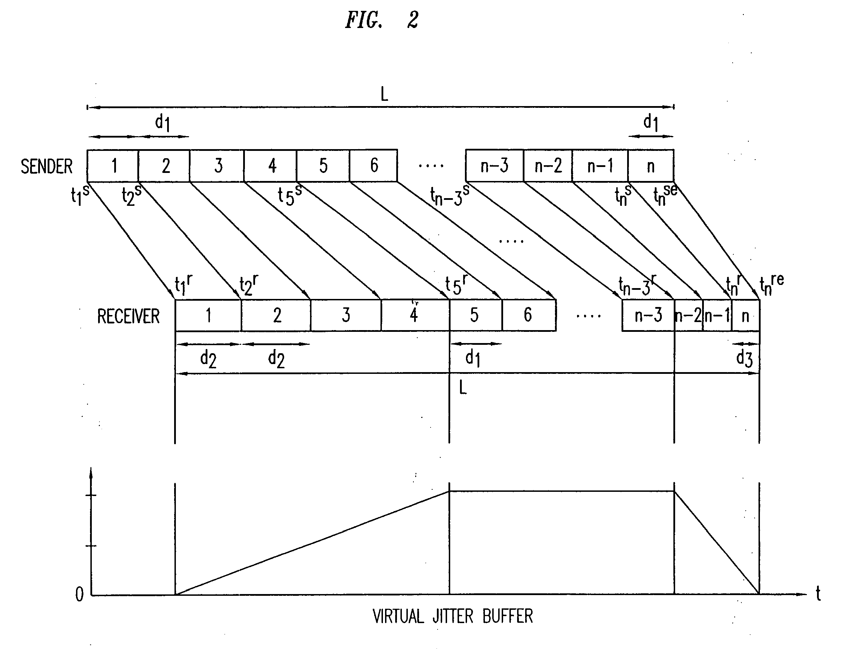

More particularly, in accordance with one illustrative embodiment of the present invention, active talk spurt management applies a time scale modification technique to decoded speech samples. Figure 2 shows the operation of a time scale modification technique for performing active talk spurt management of a single talk spurt with use of a virtual jitter buffer in accordance with one illustrative embodiment of the present invention. The figure shows both the results of the time scale modification as well as the corresponding effective playback latency of the virtual jitter buffer used.

In particular, the figure shows the operation of a single talk spurt, encoded into a number n of voice packets - each having a length (i.e., time duration) equal to d₁₋which are being transmitted from a sender to a receiver. As shown in the figure, it is assumed that the sender transmits the first voice packet (i.e., packet 1) at time t₁^{s} and that it arrives at the receiver at time t₁^{r}. In accordance with the operation of the illustrative embodiment of the invention, in order to reduce the transmission delay, t₁^{r-}t₁^{s}, the first voice packet (i.e., packet 1) of the talk spurt is decoded as soon as it arrives and sent to the playout buffer. (Note that in most prior art systems, the packet would be put into a jitter buffer to give some protection to the network jitter.) Since, in accordance with the illustrative embodiment of the invention, the first packet is played out immediately, the listener does not notice any additional delay as a result of a jitter buffer.

However, in accordance with the illustrative embodiment of the invention, the length of the speech sample from the first packet is advantageously expanded from its original length (i.e., time duration) of d₁ to d₂ (where d₂ is greater d₁), illustratively, by a pre-defined percentage of the original length d₁. In the example shown in the figure, d₂ is illustratively 50% longer than d₁ - *i.e.,* if d₁ were 20 milliseconds long (a typical length for a voice packet), then d₂ would advantageously be 30 milliseconds long. Thus, in this illustrative case, each expanded packet provides an additional 10 milliseconds worth of jitter protection to the packets which follow.

When the second packet arrives (assuming that it arrives without any additional jitter), it has to wait 10 milliseconds in the queue before it can be decoded. The next packet (under the same assumption) waits 20 milliseconds, and so on. The additional samples create a time lag between the sender and receiver's "clock," in so far as "late" packets are concerned. The illustrative example shown in the Figure 2 illustrates the case where the first four packets are played out with 50% time scale expansion. The total accumulated 40 milliseconds time lag thereby provides additional protection against network jitter. Thus, we refer herein to the effective result of this time scale expansion as the creation of a "virtual jitter buffer." Note that it also advantageously provides a look-ahead of incoming voice packet stream.

In accordance with the illustrative embodiment of the present invention, this time scale expansion operation is advantageously performed until the time lag reaches a pre-defined maximum. In the illustrative case shown in Figure 2, this pre-defined maximum is 40 milliseconds. Once the virtual jitter buffer size reaches this maximum, the following packets are advantageously played at the original time scale until the last packet of the talk spurt is detected by the receiver - that it, until this last packet "enters" the virtual jitter buffer. In the illustrative example shown in Figure 2, the virtual jitter buffer advantageously provides two packets worth of look ahead. That is, when the receiver is about to decode packet n-2, it already has received packet n *(i.e.,* the last packet).

In accordance with the illustrative embodiment of the invention, when a received packet (in this illustrative case, packet n) indicates that the current talk spurt is ending (see below for illustrative techniques for making such a determination), all of the packets remaining in the virtual jitter buffer (i.e., those which have been received but not yet played out), as well as this latest received packet (packet n), are decoded and played out, but are advantageously played out all within the original length of a single packet, d₁. In this manner, the end of the talk spurt is kept at zero added delay, and, therefore, the jitter buffer does not add to the conversational delay.

In accordance with the illustrative embodiment of the invention, the shortened playback interval described above is advantageously achieved with use of time scale contraction. Illustratively, the contracted length of each contracted packet, d₃, may be advantageously calculated to be equal to d₁/(virtual jitter buffer size+1). In this illustrative example, d₃ is 6.6667 milliseconds. In this manner, the receiver's clock will advantageously "catch up" with the sender's clock, or equivalently, the virtual jitter buffer will return to a zero size. Consequently, the entire talk spurt length (shown as L in the figure) is advantageously the same for both sender and receiver. Note that this condition advantageously results in minimizing conversational delay. Also note that modest amounts of time scale modification, such as, for example, the 10 milliseconds of additional lag for each of the first 4 packets as illustratively shown in the figure, do not cause any noticeable voice quality (or prosody) degradation, while still offering all of the advantages described above.

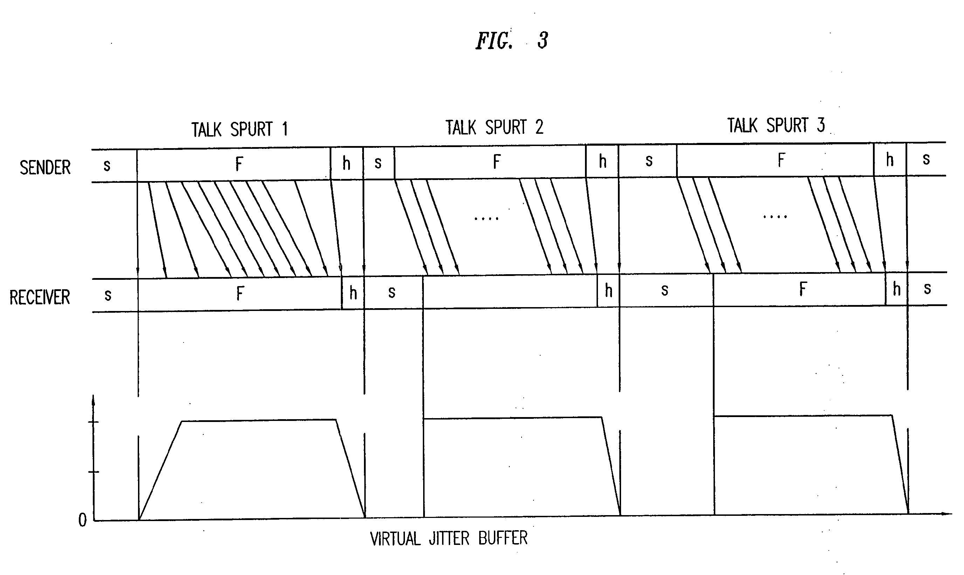

Figure 3 shows the operation of a time scale modification technique for performing active talk spurt management of a conversational turn with use of a virtual jitter buffer in accordance with one illustrative embodiment of the present invention. As can be seen in the figure, the illustrative conversational turn consists of three talk spurts. The figure shows both the timing sequences for the sender and the receiver as well as the corresponding effective depth of the virtual jitter buffer used. (For convenience, the sender and receiver timing sequence are drawn in the figure ignoring the transmission delay.)

Many variable rate vocoders (voice coders) use different packet types for voiced/unvoiced and silent portions of speech. For example, the well known EVRC vocoder, a standard voice codec (coder/decoder) used in conventional CDMA wireless communication systems fully familiar to those skilled in the art, uses variable encoding rates - full-rate encodings and half-rate encodings for active speech packets, and 1/8 rate encodings for silence interval packets. In our discussion of the illustrative example shown in Figure 3, we will assume the use of such an EVRC vocoder.

In accordance with the illustrative embodiment of the present invention, the beginning and ending of a conversational turn may be advantageously detected by counting the number of preceding 1/8 rate (i.e., silence) packets. Note that if 1/8 rate packets are suppressed (or blanked), as they are in some vocoder implementations, an internal clock or communication protocol, such as Real-Time Protocol (RTP), fully familiar to those of ordinary skill in the art, can instead be used to effectively count the number of such packets that would have been sent.

Specifically then, in accordance with the illustrative embodiment of the present invention, if a full or half-rate packet follows a series of 1/8 rate packets whose length is greater than a certain predetermined threshold, then this fact may be advantageously used to indicate the beginning of a new conversational turn, and, thus, a new talk spurt. The beginning part of the first talk spurt is then advantageously expanded and the ending part of the talk spurt is advantageously contracted as described above and illustrated in Figure 2.

However, in accordance with one illustrative embodiment of the present invention, the beginning of any subsequent talk spurt (i.e., any talk spurt other than the first talk spurt in a given conversational turn) is not necessarily expanded. Instead, it may be simply delayed by an amount of time up to the maximum virtual jitter buffer depth by the use of additional silence intervals. This is advantageously done to maximally protect the beginning part of these subsequent talk spurts from network jitter, which would otherwise receive less jitter protection (as is the case for the first several packets of the first talk spurt in the conversational turn).

In addition, in accordance with this illustrative embodiment of the present invention, since the receiver does not in general know whether the end of a given talk spurt is actually the end of a conversational turn, the ending part of each talk spurt is advantageously contracted (as described above in connection with Figure 2) in order to re-synchronize with the sender. However, if the silence interval is relatively short, and it can therefore be assumed that the end of the given talk spurt did not end a conversational turn, then the subsequent talk spurt may be advantageously delayed without impacting the perceived delay. We refer to this herein as "pushing silence."

Note that when the silence interval is very short, it may be the case that the silence was within a single word, such as the way one would normally say the word "football," for example. In this case, subsequent speech may need to be stretched as if it were the beginning of a conversational turn. This prevents a noticeable silence gap from being erroneously pushed into the middle of the word (e.g., so as to result in speech sounding like "foot-ball" rather than sounding like "foot. ball.").

The above described technique, used in accordance with the illustrative embodiment of the present invention, will advantageously ensure that the beginning and ending of each conversational turn has zero jitter buffer delay, even though not all talk spurts indicate conversational turns. Notice in the portion of Figure 3 which shows the virtual jitter buffer depth that most of the active speech packets (with the only exceptions being those packets at the beginning portion of the first talk spurt) are jitter protected up to the maximum virtual jitter buffer depth. In particular, as illustratively shown in the figure, jitter protection for all but those few excepted packets is equal to the protection given by a fixed jitter buffer with a 40 millisecond playback delay, without introducing any additional perceived delay.

In accordance with the illustrative embodiments of the present invention described above, active talk spurt management is advantageously enabled by the use of time-scale modification - that is, time scale extension and contraction. Time scale extension of a voice packet may be advantageously achieved by repeating pitch periods of the speech contained in the packet, and time scale contraction may be advantageously achieved by dropping pitch periods of the speech contained in the packet. Such operations modify the length of decoded speech samples from a packet without changing the pitch of the original speech.

As pointed out above, many variable rate vocoders use different packet types for voiced/unvoiced and silent portions of speech. In accordance with an illustrative embodiment of the present invention, a method for detecting talk spurts and conversational turns uses encoding rate information that most variable rate vocoders provide. As pointed out above, for example, EVRC vocoders use variable rates - full-rate and half-rate packets for active speech, and 1/8 rate packets for silence intervals.

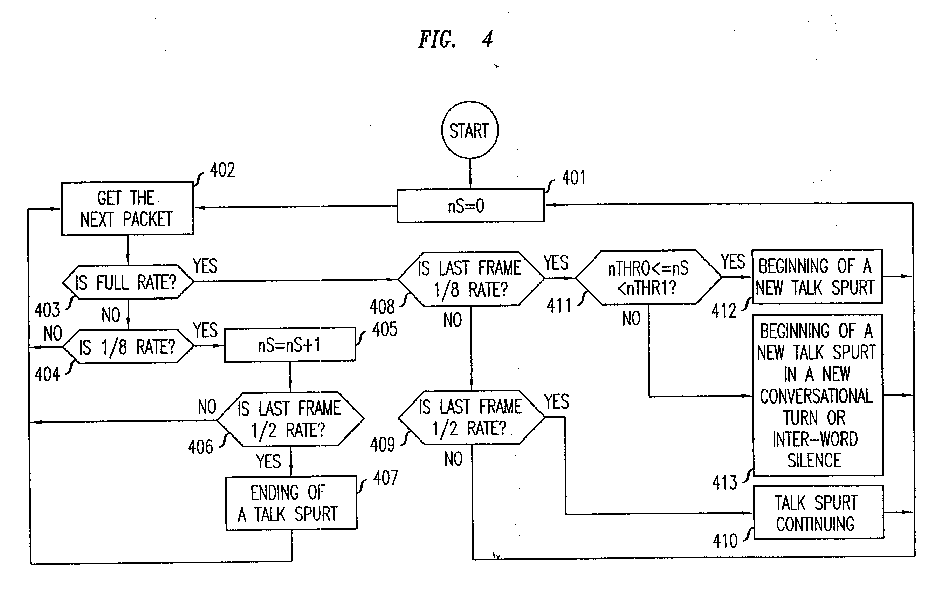

Figure 4 shows a flow diagram of a method for performing talk spurt detection in accordance with an illustrative embodiment of the present invention. The method shown in the figure assumes the rate encoding characteristics of EVRC vocoders as described above.

In particular, in accordance with the illustrative embodiment of the present invention shown in Figure 4, the beginning of a new talk spurt is advantageously assumed if there have been nThr1 (a predetermined threshold value) or more silence packets (e.g., 1/8 rate packets in the EVRC codec). When a speech packet (e.g., full or half-rate packets in the EVRC codec) is received, it is advantageously played without delay, and stretched to build the virtual jitter protection. If fewer than nThr0 (another predetermined threshold where nThr0 < nThr1) silence packets have been received, then the silence is advantageously interpreted as inter-talk silence, and the identical stretching strategy is advantageously used. (Illustratively, nThr0 may be equal to 3 and nThr1 may be equal to 15.) This avoids pumping silence into the middle of a word. If the length of the silence interval (in packets) is between the two thresholds nThr0 and nThr1, then silence is advantageously inserted to build the jitter protection to its maximum before the next speech packet is played.

Also in accordance with the illustrative embodiment of the present invention shown in Figure 4, a talk spurt is advantageously assumed to end when a half-rate packet is received. (Note that in EVRC codecs, a talk spurt necessarily ends in such a half-rate packet, although half-rate frames can occur in other situations as well). Thus, when the half-rate packet is received, the entire virtual jitter buffer contents are compressed into the nominal playback time of a packet (e.g., 20 milliseconds for EVRC codecs). By the time the last voice packet in the current talk spurt is played, the virtual jitter buffer size is advantageously back to zero latency, meaning the time lag between the encoder and decoder is back to where it was when the current talk spurt began. This advantageously ensures that the talk spurt length of sender is equal to that of the receiver.

Specifically, the flowchart of Figure 4 begins by setting the counter nS to zero in box 401, and by then getting the next packet in box 402 and checking to see if it is a full-rate packet in decision box 403. If it is not a full-rate packet, decision box 404 checks to see if it is a 1/8 rate packet. If it is not a 1/8 rate packet, flow returns to box 402 to get the next packet, but if it is a 1/8 rate packet, box 405 increments the counter nS, and then decision box 406 checks to see if the last frame was a 1/2 rate packet. If the last frame was a 1/2 rate packet, box 407 identifies the ending of a talk spurt, and, in either case (whether the last frame was a 1/2 rate packet or not) flow returns to box 402 to get the next packet.

If decision box 403 determines that the packet is a full-rate packet, decision box 408 checks to see if the last frame was an 1/8 rate packet. If the last frame was not an 1/8 rate packet, decision box 409 checks to see if the last frame was an 1/2 rate packet, and if it was, box 410 identifies that the talk spurt is continuing. Then, regardless of whether the last frame was an 1/8 rate packet or not, flow returns to box 401 to reset the counter nS to zero.

If, on the other hand, decision box 408 determines that the last frame was a 1/8 rate packet, decision box 411 checks to see if the value of the counter nS lies between the thresholds nThr0 and nThr1. If the value of the counter nS does lie between these thresholds, box 412 identifies the beginning of a new talk spurt. If, on the other hand, the value of the counter nS does not lie between these thresholds, box 413 identifies the beginning of a new talk spurt in a new conversational turn or inter-word silence. In either case (whether or not the value of the counter nS lies between the thresholds), flow returns to box 401 to reset the counter nS to zero:

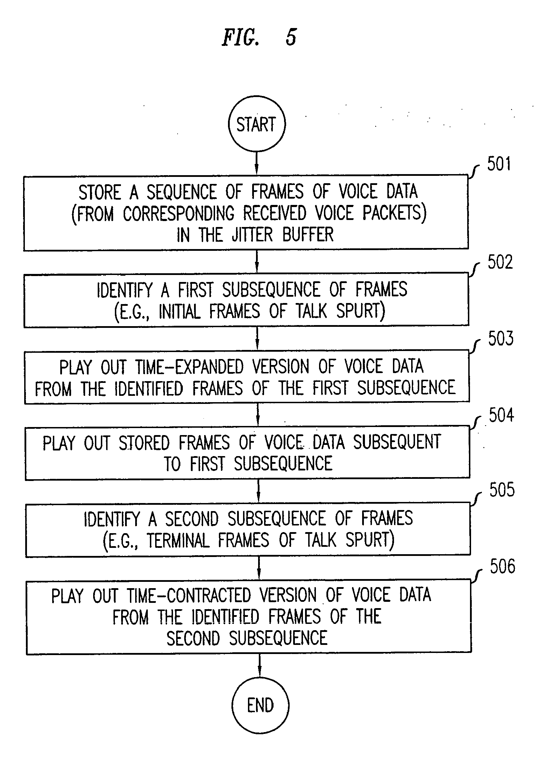

Figure 5 shows a flow diagram of a method for handling network jitter in a Voice-over IP communications network using a virtual jitter buffer and time scale modification in accordance with an illustrative embodiment of the present invention. Specifically, the illustrative method shown in Figure 5 advantageously implements the time scale modification technique for performing active talk spurt management of a single talk spurt as shown in Figure 2.

As shown in the figure, the illustrative method stores into the jitter buffer a sequence of frames of voice data from corresponding received voice packets from the network (box 501), and identifies a first subsequence comprising the first several frames of the talk spurt (box 502). Illustratively, this number of frames may be equal to 4, as shown in Figure 2. Then, the time scale of the stored voice data for these frames is expanded by a predetermined amount (illustratively 50%, as shown in Figure 2) before being played out in sequence (box 503).

For the frames of voice data comprising the "middle" portion of the talk spurt (which advantageously comprise the majority of the packets), the stored voice data for these frames are played out in sequence (box 504). And finally, a second subsequence comprising the last several frames of the talk spurt (illustratively, this number may be equal to 3, as shown in Figure 2, but will likely be based on the number of packets which have not yet been played out when a talk spurt terminating packet is detected) is identified (box 505), and the time scale of the stored voice data for these frames is contracted by a predetermined amount (illustratively by a factor of 3 to 1, as shown in Figure 2), before being played out (box 506) in sequence.

### A second illustrative embodiment of the present invention

In accordance with another illustrative embodiment of the present invention, a virtual jitter buffer advantageously provides network jitter protection as a cellular "handoff" occurs, when network jitter is likely to be most problematic. In particular, the period of time when a mobile station is switching its service base station from one base station to another typically creates a service gap. In accordance with this illustrative embodiment of the present invention, this service gap is covered by advantageous use of time-expansion in anticipation of the handoff and time-compression after the handoff has been completed.

More specifically, in accordance with this illustrative embodiment of the present invention, when it is determined that a cellular handoff from a first base station to a second base station is about to occur, a mobile station (e.g., a cell phone) advantageously begins performing time-expansion of all voice packets that it receives from the first base station (i.e., those packets received prior to the handoff) prior to their play out. This thereby increases the latency of the virtual jitter buffer and thus provides network jitter protection, particularly during the time that the handoff is occurring (i.e., the time during which the new transmission pathways through the second base station are being set up). Once the mobile station begins receiving voice packets from the second base station, it advantageously begins performing time-contraction of all voice packets received therefrom and plays them out, until the jitter buffer latency has returned to its original amount (e.g., zero).

Note that in accordance with one illustrative embodiment of the present invention, the talk spurt management technique of the first illustrative embodiment of the present invention described earlier and the cellular handoff technique of the second illustrative embodiment of the present invention described here may be advantageously combined. In particular, the talk spurt management technique described earlier adds jitter buffer latency in accordance with the various voice packets' location within a talk spurt (as described above), while the cellular handoff technique described here advantageously adds *additional* jitter buffer latency when a handoff is about to occur. Then, upon completion of the handoff (i.e., when packets arrive from the new path), time-compression is performed until the jitter buffer latency has returned to the amount determined in accordance with the talk spurt management technique.

In CDMA 2000 EVDO, Rev. A (the above-mentioned wireless communications standard fully familiar to those of ordinary skill in the art), for example, the voice packets in the virtual jitter buffer are advantageously stretched (time-expanded by a given time scale expansion ratio) across a handoff when a handoff signal is sent by the mobile station via a DSC (Digital Selective Calling) channel. (The use of a DSC channel for performing cellular handoffs is fully familiar to those skilled in the art.) Then, when packets arrive from the new path, they are advantageously compressed until playback is synchronized with the encoder clock - e.g., until the jitter buffer latency has returned to zero or to the latency determined in accordance with the talk spurt management technique. This enables an amount of (additional) jitter protection proportional to DSCLEN (DSC length, which indicates the amount of time until the handoff occurs - that is, the time that the mobile station will continue to receive packets from the first base station, and the time when it then expects to begin receiving packets from the second base station), and further proportional to the time scale expansion ratio employed.

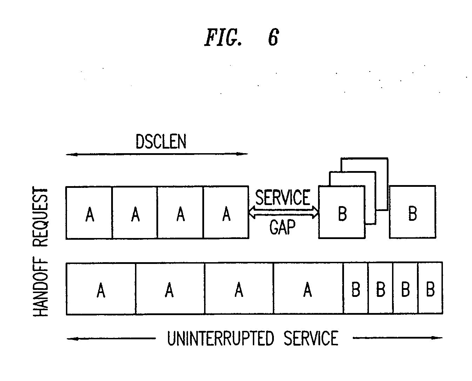

Figure 6 shows the operation of a time scale modification technique for covering a service gap during a cellular handoff with use of a virtual jitter buffer in accordance with an illustrative embodiment of the present invention. The figure shows a cellular handoff occurring from base station A to base station B, and it shows the receipt of the individual voice packets on the top and the resulting play out of these packets on the bottom. As shown in the figure, the DSCLEN is assumed to be 4 packets long (e.g., 80 milliseconds), and it is further assumed that the time scale expansion rate is 50%. With such parameters, it can be seen in the figure that a service gap of up to 40 milliseconds may occur without the occurrence of any packet loss - that is, with fully uninterrupted service. (Note that the figure shows the nearly simultaneous arrival of the first 3 packets from base station B. Such an occurrence is common, because typically, the service gap is caused primarily by the time it takes to set up a new network communications pathway. Once this pathway has been set up, it is likely that several of the transmitted packets will arrive nearly concurrently.)

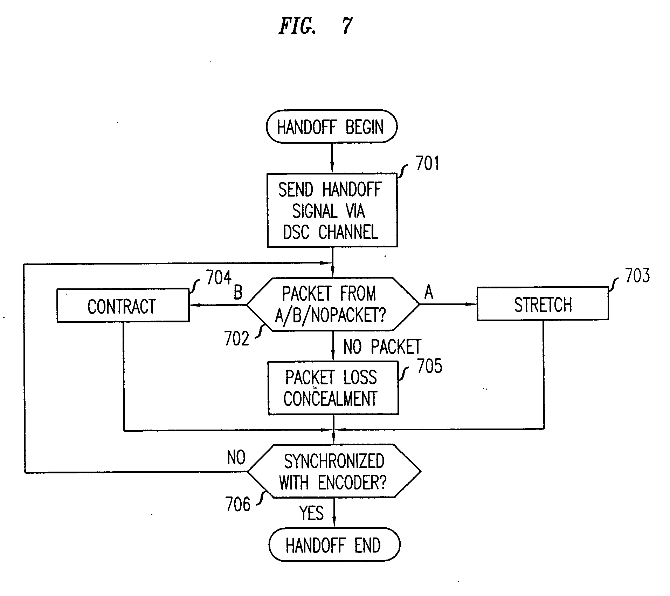

Figure 7 shows a flow diagram of a method for handling network jitter in a Voice-over IP communications network using a virtual jitter buffer and time scale modification in accordance with the illustrative embodiment of the present invention as shown in Figure 6. Once it has been determined that a handoff is to begin, the mobile station send a handoff signal via the DSC channel (box 701). Then, as the voice data from each voice packet is ready to be played out, the packet is tested (decision box 702) to determine whether it was received from base station A (the original base station that has been servicing the mobile station) or from base station B (the new base station that is taking the place of base station A in servicing the mobile station). In addition, it may be case that the voice packet was not received at all, in which case conventional packet loss concealment techniques may be advantageously employed to "replace" the missing packet.

If it is determined (by decision box 702) that the voice data from the voice packet to be played out was received from base station A, then the voice data is time-expanded (box 703) in accordance with the principles of the present invention and then played out. If, on the other hand, it is determined (by decision box 702) that the voice data from the voice packet to be played out was received from base station B, then the voice data is time-contracted (box 704) in accordance with the principles of the present invention and then played out. And if no packet was received, then the packet is replaced with use of conventional packet loss concealment techniques (box 705). Finally, if the play out is synchronized with the encoder (e.g., the jitter buffer has a zero latency, or, if talk spurt management is also being used, the jitter buffer latency has returned to the amount determined in accordance therewith), as determined by decision box 706, the handoff process is complete and the illustrative method of the present invention terminates. Otherwise, flow returns to decision box 702 to examine the origin of the voice data of the next packet to be played out.

### Addendum to the detailed description

It should be noted that all of the preceding discussion merely illustrates the general principles of the invention. It will be appreciated that those skilled in the art will be able to devise various other arrangements, which, although not explicitly described or shown herein, embody the principles of the invention, and are included within its spirit and scope. For example, in all of the above-described illustrative embodiments of the present invention, some "baseline" amount of network jitter protection may be provided at all times, in which case the network jitter protection provided in accordance with the principles of the present invention may be in addition thereto. That is, the playback latency of the jitter buffer may initially be set to a non-zero size, thereby providing some continual network jitter protection (but also providing some amount of playback latency), and then, with use of the techniques of the present invention, *additional* jitter buffer protection is advantageously provided without adding *additional* playback latency.

In addition, all examples and conditional language recited herein are principally intended expressly to be only for pedagogical purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. It is also intended that such equivalents include both currently known equivalents as well as equivalents developed in the future - *i.e.,* any elements developed that perform the same function, regardless of structure.

## Claims

1. A method for handling network jitter at a receiver in a communications network, the receiver having a jitter buffer for storing a sequence of frames of voice data comprised in a corresponding sequence of voice packets received over the communications network, the method comprising the steps of:
storing each of said frames of voice data in said jitter buffer upon receipt of said corresponding voice packet;
identifying a first subsequence of said sequence of frames of voice data;
performing time expansion on each of said stored frames of voice data in said first subsequence thereof, and playing out each of said time-expanded frames of voice data in sequence;
identifying a second subsequence of said sequence of frames of voice data; and
performing time contraction on each of said stored frames of voice data in said second subsequence thereof, and playing out each of said time-contracted frames of voice data in sequence.

2. The method of claim 1 wherein said sequence of frames of voice data comprises a talk spurt, wherein said first subsequence of said sequence of frames of voice data comprises one or more initial frames of voice data comprised in said talk spurt, and wherein said second subsequence of said sequence of frames of voice data comprises one or more terminal frames of voice data comprised in said talk spurt.

3. The method of claim 2 further comprising the step of playing out, at normal speed, one or more of said stored frames of voice data subsequent to said first subsequence of frames of voice data in said sequence of frames of voice data and previous to said second subsequence of frames of voice data in said sequence of frames of voice data.

4. The method of claim 3 wherein said first subsequence of said sequence of frames of voice data comprises a fixed, predetermined number of frames and wherein said time expansion of said frames comprises expanding said frames by a fixed time scale ratio.

5. The method of claim 4 wherein said fixed, predetermined number of frames is equal to four and wherein said fixed time scale ratio by which said frames are time expanded is equal to 50%.

6. The method of claim 3 further comprising the step of detecting receipt of a voice packet corresponding to a last frame of said sequence of frames of voice data in said talk spurt, and wherein said second subsequence of said sequence of frames of voice data comprises:
(i) those frames which are stored in said jitter buffer and which have not yet been played out as of said detection of said receipt of said voice packet corresponding to said last frame of said sequence of frames of voice data in said talk spurt; and
(ii) the last frame of said sequence of frames of voice data in said talk spurt.

7. The method of claim 6 wherein said receipt of said voice packet corresponding to said last frame of said sequence of frames of voice data in said talk spurt is detected based on said corresponding voice packet comprising a one-eighth rate frame having immediately followed a half rate frame.

8. The method of claim 3 further comprising the step of detecting receipt of a voice packet corresponding to a first frame of said sequence of frames of voice data in said talk spurt based on said corresponding voice packet comprising a full rate frame having immediately followed a one-eighth rate frame.

9. The method of claim 1 wherein said communications network comprises a wireless communications network and wherein said receiver comprises a mobile station.

10. The method of claim 9 wherein said first subsequence of said sequence of frames of voice data correspond to voice packets received by said mobile station from a first base station, and wherein said second subsequence of said sequence of frames of voice data correspond to voice packets received by said mobile station from a second base station, and wherein said mobile station undergoes a handoff from the first base station to the second base station.
